# EUROPEAN PATENT APPLICATION

(11) **EP 1 920 966 A1**
(43) Date of publication of application: **14.05.2008**
(21) Application number: 07119363.5
(22) Date of filing: 26.10.2007
(51) Int. Cl.: B60K 20/08

(54) **Instrument panel assembly for a vehicle**

(30) Priority: 01.11.2006 US 855806 P
(71) Applicant: Delphi Technologies, Inc., Troy, Michigan 48007 (US)
(72) Inventor: Vermeersch, Michael C., Saginaw, MI 48603 (US); Reppuhn, Tamara J., Hemlock, MI 48626 (US); Kreiling, Frank X., Bloomfield Hills, MI 48304 (US)
(74) Representative: Denton, Michael John

(57) **Abstract**

The present invention provides for an instrument panel assembly (20) for a vehicle. The instrument panel assembly (20) includes a dashboard (22) with an interior panel (26) disposed proximal to the dashboard (22). A shift lever (38) is pivotally attached to the interior panel (26) and movable between a drive position for allowing movement of the vehicle and a park position for preventing movement of the vehicle. At least one wall (40) extends inwardly from the interior panel (26) to define a pocket (42) complementary in configuration to a portion of the shift lever (38) for receiving the shift lever (38) when in the parked position and the shift lever (38) spaced from the pocket (42) when in the drive position.

## Description

### Technical Field

The present invention relates to an instrument panel assembly for a vehicle.

### Background of the Invention

Typically, vehicles include a passenger compartment having an instrument panel assembly disposed therein. The instrument panel assembly includes a dashboard with an interior panel disposed proximal to the dashboard. A shift lever is attached to the interior panel and movable between a drive position for allowing movement of the vehicle and a park position for preventing movement of the vehicle. The shift lever extends a predetermined distance outwardly away from the interior panel. When the shift lever moves between the drive and park positions, the shift lever remains extended in the predetermined distance outwardly from the interior panel. Therefore, the shift lever always takes up space in the passenger compartment of the vehicle and the shift lever may accidentally be moved to an undesirable position.

Therefore there remains a need to develop an instrument panel assembly having a shift lever movable in a pocket of an interior panel such that a portion of the shift lever is flush with the interior panel.

### Summary of the Invention

The present invention provides for an instrument panel assembly for a vehicle. The instrument panel assembly includes a dashboard with an interior panel disposed proximal to the dashboard. A shift lever is pivotally attached to the interior panel and movable between a drive position for allowing movement of the vehicle and a park position for preventing movement of the vehicle. At least one wall extends inwardly from the interior panel to define a pocket complementary in configuration to a portion of the shift lever for receiving the shift lever when in the parked position and the shift lever spaced from the pocket when in the drive position.

The present invention therefore provides for an instrument panel assembly having a shift lever movable in a pocket of an interior panel such that a portion of the shift lever is flush with the interior panel when in a park position. When the shift lever is disposed in the pocket of the interior panel, additional open space is created in the vehicle for moving items around in the vehicle, for placing items in the vehicle, and/or for removing items from the vehicle. In addition, moving the shift lever into the pocket when in the park position prevents undesirable movement of the shift lever to the drive position, such as by children. Additionally, the instrument panel assembly is a simple and inexpensive design with fewer components and smaller size.

### Brief Description of the Drawings

Other advantages of the present invention will be readily appreciated, as the same becomes better understood by reference to the following detailed description when considered in connection with the accompanying drawings wherein:

Figure 1 is a front view of an instrument panel assembly having a shift lever disposed on an exterior face of an interior panel;

Figure 2 is a perspective view of the instrument panel assembly having the shift lever disposed on a console of the interior panel with an alternative location of the shift lever disposed on the console as shown in phantom;

Figure 3 is an enlarged front view of a shift lever in a park position with the shift lever disposed in a pocket of the interior panel;

Figure 4 is a partial cross-sectional side view of the interior panel with the shift lever moving between the park position as shown in phantom and a drive position;

Figure 5 is a partial cross-sectional side view of the interior panel with the shift lever coupled to a link;

Figure 6 is a partial cross-sectional side view of the interior panel with the shift lever coupled to a roller and a plurality of detents for providing tactical feel to a user;

Figure 7A is an enlarged partial cross-sectional view of the shift lever in a locked position; and

Figure 7B is an enlarged partial cross-sectional view of the shift lever in an unlocked position.

### Description of the Preferred Embodiments

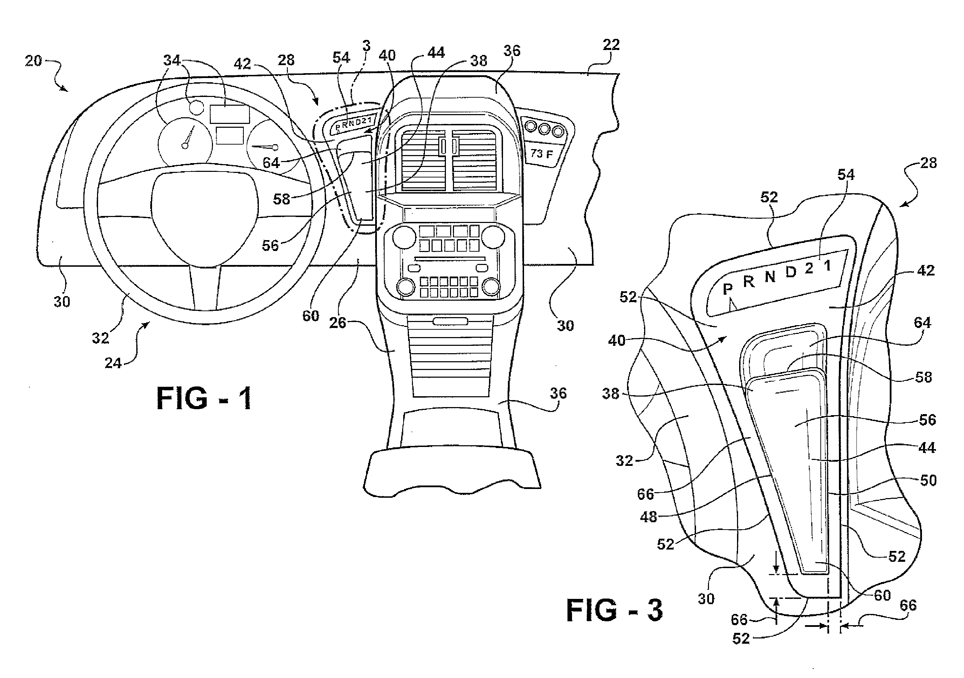

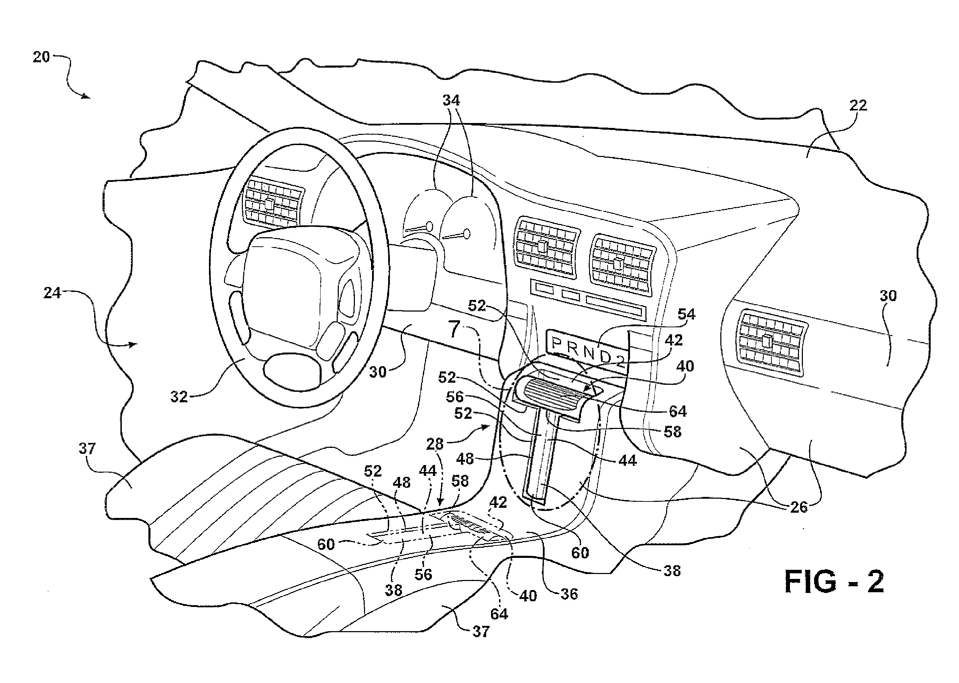

Referring to the Figures, wherein like numerals indicate like or corresponding parts throughout the several views, an instrument panel assembly 20 for a vehicle (not shown) is generally shown in Figures 1 and 2.

The instrument panel assembly 20 includes a dashboard 22 disposed in a passenger compartment 24 of the vehicle with an interior panel 26 disposed proximal to the dashboard 22. The interior panel 26 may be spaced from or abut the dashboard 22. The instrument panel assembly 20 further includes a shifter device, generally shown at 28, having the interior panel 26. The interior panel 26 includes an exterior face 30 disposed adjacent the dashboard 22. A steering wheel 32 is disposed through the interior panel 26 for steering the vehicle. More specifically, the steering wheel 32 is disposed through the exterior face 30 of the interior panel 26. An instrument cluster 34 is coupled to the interior panel 26 and disposed adjacent the steering wheel 32 for displaying various information to a user of the vehicle. More specifically, the instrument cluster 34 is coupled to the exterior face 30 of the interior panel 26.

The interior panel 26 further includes a console 36 proximal to the dashboard 22. The console 36 may be disposed between a pair of seats 37 in the passenger compartment 24 and/or may extend upwardly toward the dashboard 22 between the pair of seats 37. However it is to be appreciated that the console 36 may be disposed adjacent to the dashboard 22 and/or may be disposed adjacent to the exterior face 30. The console 36 may extend outwardly away from the exterior face 30. However it is to be appreciated that the console 36 may be substantially flush with the exterior face 30. The console 36 may also be defined as a center stack or a center console, as known to those skilled in the art.

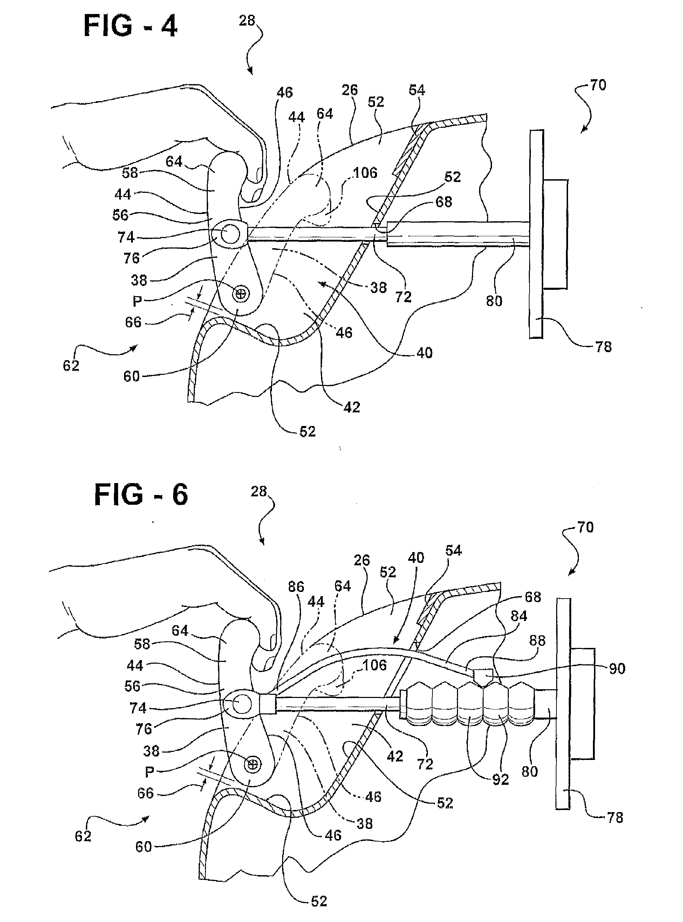

Referring to Figures 3 and 4, the shifter device 28 further includes a shift lever 38 pivotally attached to the interior panel 26 and movable between a drive position for allowing movement of the vehicle and a park position for preventing movement of the vehicle. In Figure 3, the shift lever 38 is disposed in the park position and in Figure 4, the park position of the shift lever 38 is shown in phantom. The drive and park positions will be discussed in detail below. At least one wall 40 extends inwardly from the interior panel 26 to define a pocket 42 complementary in configuration to a portion of the shift lever 38 for receiving the shift lever 38 when in the parked position and the shift lever 38 spaced from the pocket 42 when in the drive position. The shift lever 38 is readily accessible to the user of the vehicle when in the park position and the drive position, more specifically readily accessible to a driver of the vehicle. In other words, the shift lever 38 is readily accessible to the driver of the vehicle at all times, even when the vehicle is turned off.

The shift lever 38 includes a front surface 44 and a back surface 46 with the back surface 46 disposed in the pocket 42 and a portion of the front surface 44 disposed flush with the interior panel 26 when in the park position for creating additional open space in the vehicle. More specifically as shown in Figure 1, when the shift lever 38 is coupled to the exterior face 30, the portion of the front surface 44 of the shift lever 38 is disposed flush with the exterior face 30 when in the park position for creating additional open space in the vehicle. Alternatively as shown in Figure 2, when the shift lever 38 is coupled to the console 36, the portion of the front surface 44 of the shift lever 38 is disposed flush with the console 36 when in the park position for creating additional open space in the vehicle. It is to be appreciated that the shift lever 38 and pocket 42 may be disposed anywhere in the passenger compartment 24 as long as the shift lever 38 is accessible by the user of the vehicle, more specifically accessible by the driver of the vehicle. The additional open space in the passenger compartment 24 allows the user to easily move items around in the vehicle, place items in the vehicle, and/or remove items from the vehicle. In addition, moving the shift lever 38 into the pocket 42 when in the park position prevents undesirable movement of the shift lever 38 to the drive position, such as by children. It is to be appreciated that the portion of the front surface 44 of the shift lever 38 disposed flush with the exterior face 30 or the console 36 may be defined as the entire front surface 44 or any portion of the front surface 44 as long as the shift lever 38 is partially disposed in the pocket 42 of the interior panel 26.

Referring back to Figures 3 and 4, the shift lever 38 includes a first side 48 and a second side 50 spaced from each other and disposed adjacent to the front and back surfaces 44, 46. The first and second sides 48, 50 face the wall 40 and are disposed in the pocket 42 of the interior panel 26. More specifically, the wall 40 may be further defined as a plurality of walls 52 extending inwardly from the interior panel 26 to define the pocket 42 with each of the first and second sides 48, 50 and the back surface 46 of the shift lever 38 facing one of the walls 52. The portion of the shift lever 38 disposed in the pocket 42 is defined as the first and second sides 48, 50 and the back surface 46. However it is to be appreciated that the portion of the shift lever 38 may be defined as more or less components.

A plurality of indicators 54 are disposed on at least one of the interior panel 26 and the wall 40 for displaying the drive and park positions to the user. Preferably, the indicators 54 are disposed on the wall 40, more specifically on one of the walls 52. However it is to be appreciated that the indicators 54 may be disposed on the interior panel 26 (as shown in Figure 2), the dashboard 22, the instrument cluster 34 or anywhere in the passenger compartment 24 as long as the indicators 54 are viewable by the user.

The instrument panel assembly 20 and the shifter device 28 further include a shift lever apparatus generally shown at 62. The shift lever apparatus 62 includes the shift lever 38 having a central body 56. The central body 56 includes a distal end 58 and a pivot end 60 for pivotally attaching to the interior panel 26 with the central body 56 pivotal between the drive position for allowing movement of the vehicle and the park position for preventing movement of the vehicle. The pivot end 60 defines a pivot axis P for pivotally attaching the shift lever 38 to the interior panel 26 and for allowing rotation of the shift lever 38 about the pivot axis P between the drive position and the park position. More specifically, the pivot end 60 defines the pivot axis P for pivotally attaching the central body 56 to the interior panel 26 and for allowing rotation of the central body 56 about the pivot axis P between the drive position and the park position.

The shift lever apparatus 62 includes a handle 64 disposed on the distal end 58 of the central body 56 for allowing the user to move the shift lever 38 between the drive and park positions, more specifically the shift lever 38 includes the handle 64. Preferably the handle 64 and the central body 56 of the shift lever 38 are integrally formed of a homogeneous material. However it is to be appreciated that the handle 64 may be coupled to the distal end 58 by a plurality of fasteners, an adhesive, welding or any acceptable method known to those skilled in the art. It is also to be appreciated that the first and second sides 48, 50 and the front and back surfaces 44, 46 extend along the central body 56, the handle 64, the distal end 58 and the pivot end 60 of the shift lever 38. The handle 64 is spaced a predetermined distance from one of the walls 52 for allowing the user to easily grasp the handle 64 without interference from the walls 52 and for rotating the shift lever 38 between the park and drive positions. More specifically, the back surface 46 of the shift lever 38 is spaced the predetermined distance from one of the walls 52. Even more specifically, the back surface 46 of the handle 64 is spaced the predetermined distance from one of the walls 52.

The walls 52 and the shift lever 38 define a gap 66 therebetween for allowing the shift lever 38 to rotate freely without frictional interference between the walls 52, the first and second sides 48, 50, and the pivot end 60 of the shift lever 38. However it is to be appreciated that the shift lever 38 may abut the walls 52 as long as the shift lever 38 can rotate between the drive and park positions. At least one of the walls 52 defines an aperture 68 and will be discussed below.

The shift lever apparatus 62 further includes a gear select mechanism 70 coupled to the shift lever 38 for communicating the drive and park positions to the vehicle. The gear select mechanism 70 includes a transmission (not shown) having a plurality of gear positions (not shown) communicating with the drive position and the park position of the shift lever 38 for selectively allowing and preventing movement of the vehicle. The gear positions corresponding to the drive position may include a neutral position, a reverse position, a first drive position, a second drive position such as an overdrive position, a manual position, a first low position, and a second low position. However it is to be appreciated that more, less and/or other gear positions are possible for allowing movement of the vehicle. The gear positions corresponding to the park position may include any gear position for preventing movement of the vehicle, such as a park position.

The gear select mechanism 70 further includes a cable 72 coupled to the shift lever 38 such that movement of the shift lever 38 causes the cable 72 to move with the shift lever 38 for communicating the drive and park positions to the vehicle, more specifically to communicate the drive and park positions to the transmission. The cable 72 is coupled to the central body 56 of the shift lever 38 such that movement of the central body 56 causes the cable 72 to move with the central body 56 for communicating the drive and park positions to the vehicle. The cable 72 may be coupled to the shift lever 38 by any suitable coupler, such as a ball 74 and a stud 76 configuration, a plurality of fasteners or any other coupler known to those skilled in the art. Preferably, the cable 72 is coupled to the shift lever 38 at a predetermined distance spaced from the pivot axis P (as shown in Figure 4). However it is to be appreciated that the cable 72 may be coupled anywhere on the shift lever 38 as long as movement of the shift lever 38 causes the cable 72 to move with the shift lever 38.

A bracket 78 is coupled to the instrument panel and the cable 72 for supporting the cable 72. The cable 72 extends through the aperture 68 of one of the walls 52 and couples to the bracket 78. A conduit 80 is disposed about the cable 72 for protecting and supporting the cable 72 and will be discussed below.

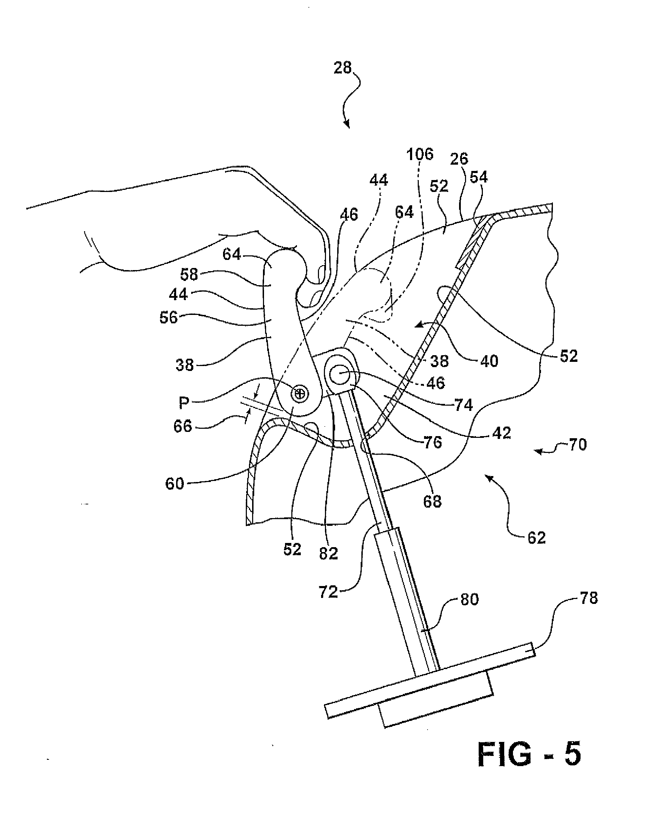

As shown in Figure 5, the shift lever 38 is shown in phantom in the park position and the gear select mechanism 70 may include a link 82 coupled to the shift lever 38 and the cable 72 such that movement of the shift lever 38 causes the link 82 and the cable 72 to move with the shift lever 38 for communicating the drive and park positions to the vehicle. The link 82 is coupled to the shift lever 38 and extends outwardly away from the pivot axis P. The link 82 may be coupled to the shift lever 38 about the pivot axis P such that rotation of the shift lever 38 causes the link 82 to rotate about the pivot axis P to move the cable 72. However it is to be appreciated that the link 82 may be coupled to the shift lever 38 at a predetermined distance spaced from the pivot axis P or may be coupled anywhere on the shift lever 38 as long as movement of the shift lever 38 causes the link 82 and the cable 72 to move. In addition, it is to be appreciated that the link 82 is optional.

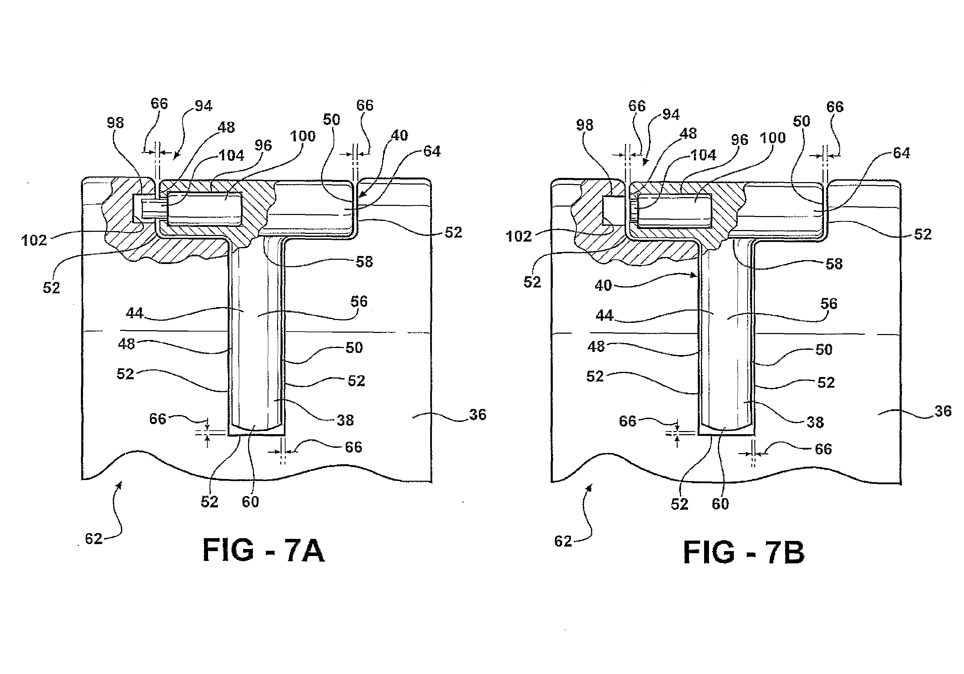

Referring to Figure 6, the shift lever 38 is shown in phantom in the park position and the gear select mechanism 70 may further include a biasing member 84 having a first end 86 and a second end 88 coupled to the shift lever 38 with the first end 86 of the biasing member 84 coupled to the shift lever 38 and disposed through the aperture 68 of one of the walls 52. A roller 90 may be coupled to the second end 88 of the biasing member 84 and a plurality of detents 92 may be disposed on a portion of the conduit 80 such that movement of the shift lever 38 between the drive and park positions causes the roller 90 to move along the detents 92 for providing tactical feel to the user when changing between the gear positions. It is to be appreciated that any device known to those skilled in the art may be used for providing tactical feel to the user when changing between the gear positions. The biasing member 84 may be defined as a plurality springs or any other acceptable biasing member known to those skilled in the art for allowing the roller 90 to move along the detents 92. However it is to be appreciated that the biasing member 84, the roller 90 and the detents 92 are optional. In other words, providing tactical feel to the user when changing between the gear positions is optional.

Referring to Figures 7A and 7B, the shifter device 28 includes a locking mechanism 94 for selectively allowing and preventing rotation of the shift lever 38. The locking mechanism 94 includes a first portion 96 coupled to the shift lever 38 and a second portion 98 coupled to the wall 40, more specifically coupled to one of the walls 52. At least one of the first and second portions 96, 98 are movable between a locked position for preventing movement of the shift lever 38 relative to the wall 40 and an unlocked position for allowing movement of the shift lever 38 relative to the wall 40, more specifically relative to the walls 52. The locked position is shown in Figure 7A and the unlocked position is shown in Figure 7B. In addition, the shift lever apparatus 62 includes the locking mechanism 94 having the first portion 96 coupled to the handle 64 and the second portion 98 adapted to be associated with the interior panel 26 with at least one of the first and second portions 96, 98 movable between the locked position for preventing movement of the central body 56 of the shift lever 38 relative to the interior panel 26 and the unlocked position for allowing movement of the central body 56 of the shift lever 38 relative to the interior panel 26.

The first portion 96 is defined as at least one of an actuator 100 and a chamber 102 and the second portion 98 defines another of the actuator 100 and the chamber 102. At least one of the actuator 100 and the chamber 102 is movable between the locked position for preventing movement of the shift lever 38 relative to the walls 52 and the unlocked position for allowing movement of the shift lever 38 relative to the walls 52. Preferably, the first portion 96 is defined as the actuator 100 and is movable between the locked position and the unlocked position and the second portion 98 is defined as the chamber 102 adapted to be associated with the interior panel 26, more specifically disposed in one of the walls 52. In other words, the actuator 100 is disposed in the shift lever 38 and movable between the locked position for preventing movement of the central body 56 relative to the interior panel 26 and the unlocked position for allowing movement of the central body 56 relative to the interior panel 26. However it is to be appreciated that the first portion 96 may define the chamber 102 and the second portion 98 may define the actuator 100.

The actuator 100 includes a rod 104 movable from the chamber 102 in response to actuation of the actuator 100 between the locked position for preventing movement of the shift lever 38 relative to the walls 52 and the unlocked position for allowing movement of the shift lever 38 relative to the walls 52. In other words, the rod 104 is movable between the locked position for preventing movement of the central body 56 relative to the interior panel 26 and the unlocked position for allowing movement of the central body 56 relative to the interior panel 26. The actuator 100 may be defined as a solenoid device, a pneumatic device, a hydraulic device, an electric device, a manual device and/or any other device for selectively retracting and extending the rod 104 from and into the chamber 102.

Preferably, the rod 104 extends from the shift lever 38 and into the chamber 102 of one of the walls 52. More preferably, the rod 104 extends from at least one of the first and second sides 48, 50 of the shift lever 38. Even more preferably, the rod 104 extends from the first side 48 of the handle 64 of the shift lever 38. However it is to be appreciated that the rod 104 may extend from the first side 48, the second side 50, or the back surface 46 of the shift lever 38 as long as the chamber 102 aligns with the rod 104. It is to be further appreciated that the actuator 100 and the rod 104 may extend from one of the walls 52 and into the chamber 102 of the shift lever 38. When the shift lever 38 defines the chamber 102, preferably, the chamber 102 is disposed in at least one of the first and second sides 48, 50 of the shift lever 38. More preferably, the chamber 102 is disposed in the first side 48 of the handle 64 of the shift lever 38. Less resistance is required to prevent rotation of the shift lever 38 when the chamber 102 or the actuator 100 is disposed in the handle 64. In other words, by disposing the chamber 102 or the actuator 100 in the handle 64 of the shift lever 38, the chamber 102 or the actuator 100 is disposed a predetermined distance as far as possible away from the pivot axis P and thus less resistive strength is required to prevent rotation of the shift lever 38. However it is to be appreciated that the chamber 102 or the actuator 100 may be disposed anywhere in the shift lever 38 as long as the rod 104 aligns with the chamber 102 for selectively allowing and preventing movement of the shift lever 38.

Also referring to Figures 4-6, the actuator 100 may be defined as the manual device. The manual device includes a button 106 coupled to the shift lever 38 for selectively allowing and preventing movement of the shift lever 38 relative to the walls 52. Preferably, the button 106 is disposed on the handle 64. More preferably, the button 106 is disposed on the back surface 46 of the handle 64 such that the button 106 is disposed in the pocket 42. The button 106 spaced a predetermined distance away from one of the walls 52 for allowing the user to easily grasp the handle 64 and depress the button 106 without interference from the walls 52 and for rotating the shift lever 38 between the park and drive positions. When the button 106 is depressed by the user, the rod 104 retracts from the chamber 102 for allowing movement of the shift lever 38 from the park position to the drive position. However it is to be appreciated that the button 106 may be any kind of component for selectively allowing and preventing movement of the shift lever 38, such as a touch pad, a slide pad or a switch.

The locking mechanism 94 may be a portion of a brake transmission shift interlock (BTSI) mechanism. The BTSI mechanism is known to those skilled in the art and will be briefly discussed. The BTSI mechanism includes a brake pedal (not shown) for stopping and/or preventing movement of the vehicle, an ignition (not shown) and the first and second portions 96, 98 as discussed above. Preferably, the actuator 100 is defined as the solenoid device. However it is to be appreciated that the actuator 100 may be any kind of device as discussed above for selectively retracting and extending the rod 104. It is also to be appreciated that the BTSI mechanism may include other components as known to those skilled in the art. The BTSI mechanism is utilized for preventing the shift lever 38 from being rotated from the park position to the drive position without depressing the brake pedal and turning the ignition to an on position.

For illustrative purposes only an example of the BTSI mechanism will be discussed below. Prior to depressing the brake pedal and turning the ignition to the on position, the shift lever 38 is unable to rotate from the park position to the drive position due to the rod 104 of the actuator 100 being extended into the chamber 102. Once the ignition is turned to the on position and the brake pedal is depressed, a signal is communicated to the actuator 100 to retract the rod 104 from the chamber 102 for allowing movement of the shift lever 38 from the park position to the drive position. In other words, the actuator 100 automatically retracts the rod 104 from the chamber 102 when the ignition is turned to the on position and the brake pedal is depressed. When the shift lever 38 is rotated from the drive position to the park position and the ignition is turned to an off position, the front surface 44 of the shift lever 38 is disposed flush with the interior panel 26 and the actuator 100 extends the rod 104 into the chamber 102 for preventing the shift lever 38 from rotating from the park position to the drive position. However it is to be appreciated that the BTSI mechanism may be activated by other combinations, such as only requiring the brake pedal to be depressed before the rod 104 of the actuator 100 is retracted from the chamber 102 or any other combination for selectively retracting and extending the rod 104 of the actuator 100 from and into the chamber 102. It is to be further appreciated that the manual device discussed above may include a portion of the BTSI mechanism. For example before the button 106 can be depressed to retract the rod 104, the ignition must be turned to the on position and the brake pedal must be depressed.

Obviously, many modifications and variations of the present invention are possible in light of the above teachings. The foregoing invention has been described in accordance with the relevant legal standards; thus, the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A shifter device (28) for a vehicle, said device (28) comprising;
an interior panel (26),
a shift lever (38) pivotally attached to said interior panel (26) and movable between a drive position for allowing movement of the vehicle and a park position for preventing movement of the vehicle, and
at least one wall (40) extending inwardly from said interior panel (26) to define a pocket (42) complementary in configuration to a portion of said shift lever (38) for receiving said shift lever (38) when in said parked position and said shift lever (38) spaced from said pocket (42) when in said drive position.

2. A device (28) as set forth in claim 1 wherein said shift lever (38) includes a front surface (44) and a back surface (46) with said back surface (46) disposed in said pocket (42) and a portion of said front surface (44) disposed flush with said interior panel (26) when in said park position for creating additional open space in the vehicle.

3. A device (28) as set forth in claim 2 wherein said shift lever (38) includes a first side (48) and a second side (50) spaced from each other and adjacent to said front and back surfaces (44, 46) with said first and second sides (48, 50) facing said wall (40) and disposed in said pocket (42) of said interior panel (26).

4. A device (28) as set forth in claim 3 wherein said wall (40) is further defined as a plurality of walls (52) extending inwardly from said interior panel (26) to define said pocket (42) with each of said first and second sides (48, 50) and said back surface (46) of said shift lever (38) facing one of said walls (52).

5. A device (28) as set forth in any of the preceding claims wherein said shift lever (38) includes a pivot end (60) defining a pivot axis (P) for pivotally attaching said shift lever (38) to said interior panel (26) and for allowing rotation of said shift lever (38) about said pivot axis (P) between said drive position and said park position.

6. A device (28) as set forth in any one of the preceding claims wherein said shift lever (38) comprises;
a central body (56) having a distal end (58) and a pivot end (60) for pivotally attaching to said interior panel (26) with said central body (56) pivotal between a drive position for allowing movement of the vehicle and a park position for preventing movement of the vehicle, and
a handle (64) disposed on said distal end (58) of said central body (56), and

7. A device (28) as set forth in claim 6 further including a locking mechanism (94) having a first portion (96) coupled to said handle (64) and a second portion (98) coupled to said interior panel (26) with at least one of said first and second portions (96, 98) movable between a locked position for preventing movement of said central body (56) relative to said interior panel (26) and an unlocked position for allowing movement of said central body (56) relative to said interior panel (26).

8. A device (28) as set forth in claim 7 wherein said first portion (96) is defined as at least one of an actuator (100) and a chamber (102) and said second portion (98) defines an other of said actuator (100) and said chamber (102) with at least one of said actuator (100) and said chamber (102) movable between said locked position and said unlocked position.

9. A device (28) as set forth in claim 8 wherein said first portion (96) is defined as said actuator (100) and movable between said locked position for preventing movement of said central body (56) relative to said interior panel (26) and said unlocked position for allowing movement of said central body (56) relative to said interior panel (26).

10. A device (28) as set forth in claim 8 wherein said actuator (100) includes a rod (104) movable from said chamber (102) in response to actuation of said actuator (100) between said locked position for preventing movement of said central body (56) relative to said interior panel (26) and said unlocked position for allowing movement of said central body (56) relative to said interior panel (26).
